# EUROPEAN PATENT SPECIFICATION

(11) **EP 3 178 220 B1**
(45) Date of publication and mention of the grant of the patent: **13.11.2019**
(21) Application number: 14750189.4
(22) Date of filing: 06.08.2014
(51) Int. Cl.: H04L 29/12, H04W 76/15

(54) **IPV6 INTERFACE ID FILTER USING A SINGLE PDN CONNECTION**
IPV6 INTERFACE ID FILTER DER EINE EINZIGE PDN VERBINDUNG BENUTZT
IDENTIFIANT D'INTERFACE IPV6 UTILISANT UNE SEULE CONNEXION PDN

(43) Date of publication of application: 14.06.2017
(73) Proprietor: Nokia Solutions and Networks Oy, 02610 Espoo (FI)
(72) Inventor: HAHN, Wolfgang, 16562 Bergfelde (DE); VESTERINEN, Seppo Ilmari, FI-90460 Oulunsalo (FI); RASANEN, Juha Antero, FI-02660 Espoo (FI)
(74) Representative: TBK
(86) International application number: PCT/EP2014/066914
(87) International publication number: WO 2016/019989

(56) References cited:
- US-A1- 2011 110 378
- US-B1- 8 566 455
- PHATAK D S ET AL: "A novel mechanism for data streaming across multiple IP links for improving throughput and reliability in mobile environments", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 2, 23 June 2002 (2002-06-23), pages 773-781, XP010593639, DOI: 10.1109/INFCOM.2002.1019323 ISBN: 978-0-7803-7476-8

## Description

### Field of the invention

The present invention relates to an apparatus, a method, and a computer program product related to data communication. More particularly, the present invention relates to an apparatus, a method, and a computer program product related to multipath TCP with dual LTE connections.

### Background of the invention

### Abbreviations

- 3GPP: Third Generation Partnership Project
- ANDSF: Access Network Discovery and Selection Function
- AP: Access Point, e.g. a radio node in a Wi-Fi network
- APN: Access Point Name
- CN: Core Network
- DSMIP: Dual Stack Mobile IP
- eNB: evolved NodeB, LTE (EUTRAN) base station
- EPC: Evolved packet Core
- EPS: Evolved Packet System
- E-RAB: EUTRAN Radio Access Bearer
- EUTRA: Evolved UTRA
- EUTRAN: EUTRA network
- ID: Identifier
- IETF: Internet Engineering Task Force
- IFOM: IP Flow Mobility
- IID: Interface ID
- IP: Internet Protocol
- IP-CAN: IP Connectivity Access Network
- GPRS: General Packet Radio Service
- GTP: GPRS Tunnelling Protocol
- GTP-u: GTP User plane
- GW: Gateway
- LTE: Long Term Evolution
- LV: Length and Value
- M: Mandatory
- MeNB: Master eNB
- MCG: Master Cell Group
- MME: Mobility Management Entity
- MPTCP: Multipath TCP
- NAS: Non-Access Stratum
- NW: Network
- O: Optional
- P-GW: PDN Gateway
- PCO: Protocol Configuration Option
- PDN: Packet Data Network
- PLMN: Public Land Mobile Network
- Pre: Prefix
- PTI: Procedure Transaction Identifier
- QoS: Quality of Service
- RA: Radio Access
- RAN: Radio Access Network
- RAT: Radio Access Technology
- Rel: Release (e.g. version of a 3GPP standard specification)
- RFC: Request for Comments (IETF specification)
- S1-u: S1 tunnelling interface (typically uses GTP-u)
- SCG: Secondary Cell Group
- SeNB: Secondary eNB
- S-GW: Serving Gateway
- TAD: Traffic Aggregate Description
- TCP: Transmission Control Protocol
- TFT: Traffic Flow Template
- TLV: Type, Length, and Value
- TR: Technical Report
- TS: Technical Specification
- TV: Type and Value
- UDP: User Datagram Protocol
- UE: User Equipment
- UMTS: Universal Mobile Telecommunications System
- UTRA: UMTS Terrestrial Radio Access
- UTRAN: UTRA network
- V: Value
- VoLTE: Voice over LTE
- Wi-Fi: Wireless Fidelity, e.g. defined by IEEE802.11 specifications and/or certified by Wi-Fi Alliance
- WLAN: Wireless Local Area Network (also named Wi-Fi)

The present application relates to the 3GPP connectivity and multipath TCP (MPTCP) transport. 3GPP connectivity is defined to provide EPS bearer services to a User Equipment (UE) over a radio access network (RAN). EPS connectivity is capable of granting an IP address or multiple IP addresses to a UE, in order the UE to connect to the internet. Conventionally, such a PDN connection might comprise several bearers supporting different QoS and sharing the same IP address.

In 3GPP release 12 study on small cell enhancements for EUTRA and EUTRAN, dual connectivity is described as a solution to serve UE from macro cells and from smaller cells at the same time. The study identifies multiple architectural alternatives, from which option 1A and option 3C were decided to be standardized in the work item, yet in release 12 schedule.

Both options allow to establish two bearers inside a PDN connection that use different path in the radio network, one connecting a UE with a Master eNB (MeNB) and the other transferring at least part of a bearer traffic over a Secondary eNB (SeNB).

MPTCP provides aggregation of multi-path traffic at the upper layers (IP). The "multi-path" should be implemented over two ordinary EPS bearer services.

The current 3GPP specifications support UEs to use multiple bearers sharing the same IP Address. According to these specifications, there is always a default bearer and optionally dedicated bearers. The traffic is separated by traffic flow templates (TFT) that contain filter information describing what traffic should be directed to what bearer (in the UE in UL direction and in P-GW in DL direction). A Filter may contain components like the source and/or destination IP address, port number or a range of port numbers, prefix length (for IPv6 address), security parameter index, type of service/Traffic class, Flow label type (as per 3GPP TS 24.008). Related to each filter there is also an evaluation precedence parameter.

In case of IPv6, the addresses consist of a prefix part (Pre) that is assigned by the network (P-GW) and an interface ID (IID) that is assigned by the device/UE. To be able to use MPTCP, each path is identified in the MPTCP stack by the IP address that represents the network socket/network interface of the device.

In PCT/EP2014/061325, filed June 2, 2014, it was proposed to use different IP addresses also inside a PDN connection. As one option to support MPTCP it is suggested to let the UE assign multiple IPv6 addresses from the address range that belongs to the single IPv6/64 prefix associated to the used PDN connection by assigning only different IPv6 interface identifiers. Such a solution has the advantage to be very much compliant with current procedures and specification and limits the implementation effort. This means different bearers share still the same IPv6 prefix and use only different IID.

According to PCT/EP2014/061325, it possible to use the MeNB access and the SeNB access for dual connectivity, not only in the radio bearer services but additionally also in the IP connectivity. Thus, MPTCP may run over two subflows, one over the MeNB access path and the other over the SeNB access path

The current 3GPP specified IP link model follows the point-to-point IP attachment paradigm. There is a limitation that just a single IPv6 prefix within a PDN connection is allowed. On the other hand, an IPv6 multi-homing UE may establish another PDN connection. Multi-homing means that UE is granted multiple independent addressable IP addresses to be valid simultaneously. According to PCT/EP2014/061325, the UE may, for this reason, request from the 3GPP P-GW multiple IP address for the establishment of multiple PDN connections, each connection having an own IP address. The P-GW may grant and assign UE, at the UE request, multiple PDN connections and multiple IP addresses. In this manner, the limitation of the prior art is overcome.

According to PCT/EP2014/061325, the small cell architecture enhancement option 1A in 3GPP supports LTE dual connectivity via two base stations such as a Master eNB (MeNB) and a Secondary eNB (SeNB). In these embodiments, the UE sees two radio interfaces and two data paths. The bearers served by MeNB and the bearers served by SeNB are separate, and according to the invention they need to be coupled together in order to serve a MPTCP connection. According to some embodiments of the invention, these bearers serve different PDN connections, the PDN connections of which have a different IP point of attachment, i.e. they are served by a different IP address.

According to PCT/EP2014/061325, the default EPS bearer may be via the MeNB as the primary data path, and, when available and/or required (e.g. because of capacity requirements), an additional "booster" EPS bearer is via the SeNB as the secondary data path. Thus, a MPTCP connection is set up over these bearers.

In order to operate the MPTCP, the UE uses different IPv6 addresses for each interface/data path, so that UE uses multiple IPv6 addresses within a single PDN connection. In particular, if the UE desires MPTCP connections, the UE may request and thereafter configure different IPv6 addresses to the default EPS bearer and to the "booster" EPS bearer. An UE may also use two bearers of type "default EPS bearer". When using the booster bearer, its bearer parameters, for example quality of service parameters, may be the same as the parameters of the default EPS bearer or different from the parameters of the default EPS bearer. When using two default EPS bearer types, their parameters may be equal or they may be different. In some embodiments of the invention, a booster bearer may inherit some or all of the bearer parameters from the default EPS bearer. In this manner, the booster bearer yet provides boosting, because it uses different radio resources, capacity and a different data path than the default EPS bearer in dual connectivity. In contrast to that, conventionally, a booster bearer having the same parameters as the default bearer would not boost because it uses the same resources as the default bearer.

The UE may set up a MPTCP connection with a server, when both of them support MPTCP connection. MPTCP first executes the initial TCP connection setup using one IP address and then it further sets up additional subflows to use the other IP address(es) to form a MPTCP connection. Once having the MPTCP connection running over two (or more) IP addresses, over the two (or more) bearers, the MPTCP protocol and algorithms define how to use these IP subflows for a traffic, in a joint-optimal manner. In some embodiments, LTE EPC need not control this mapping, if it enables the use of multiple IP addresses over different data paths, in dual connectivity.

"Link Model for Multi-Prefix EPS Bearer" (WO 2013/083189) issued a mechanism to support IPv6 multi-homing by allowing to use multiple IPv6 prefixes over a single PDN connection. According to this application, ordinary EPS bearer services are supported via a P-GW and possible additional Local IP Breakout services from the S-GW and the eNB by using co-located L-GW i.e. having multiple IP points of attachments each using different IPv6 prefix on the single data path (UE - eNB - S-GW - P-GW). According to this invention, different bearers are used for the different IP Prefixes only at the Radio interface, but not in the core network.

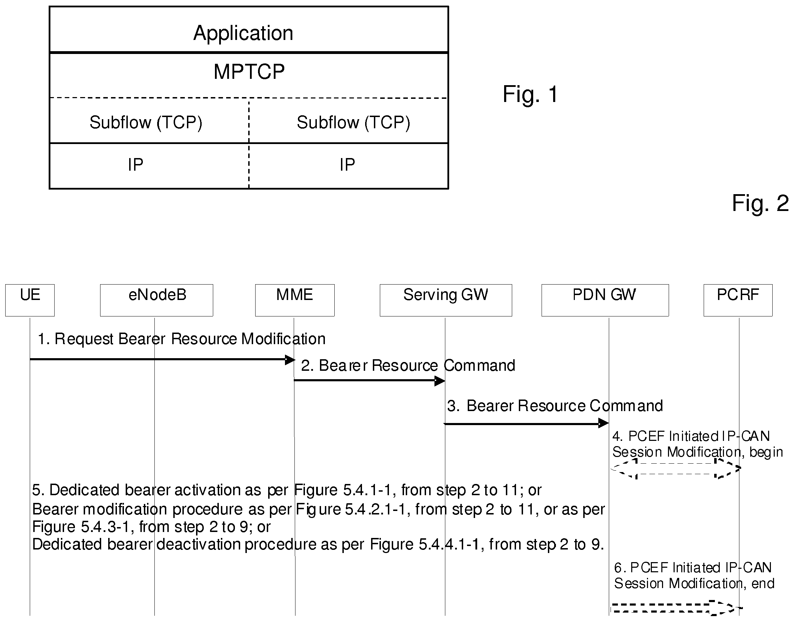

MPTCP is specified by IETF in RFC6824 as TCP extensions for Multipath Operation with Multiple Addresses, in January 2013. The architecture, connection management, subflow handling and coupled congestion control (RFC6356) are defined in IP layer and above. MPTCP stack, as shown in RFC6824 and replicated in Fig. 1, is different from the conventional TCP/IP stack.

The benefits of MPTCP are achievable best if different routing paths between the source and destination can be provided. For end-to-end paths which include wireless access (last mile) between the client and the server, the radio access network is typically the critical section along the path in terms of bandwidth, delay and link robustness. If multi-access radio connections cannot be provided for a wireless device, when MPTCP is used, the multipath benefits are limited to the fixed network transport. The use of wireless access networks is out-of scope of the IETF descriptions.

An Access Point Name (APN) is a name of a gateway between a mobile network and another computer network, such as the Internet. APN may consist of network identifier and operator identifier. Network identifier defines to which external network the access network is connected to, via the PDN gateway (P-GW) of an operator. Operator identifier defines in which network the gateway is located (for example it may be the PLMN of an operator or it may be an Internet service provider).

3GPP TS 24.301 and 24.008 define the procedures and TFT/TAD filters which the proposed invention with its proposed additions is based on.

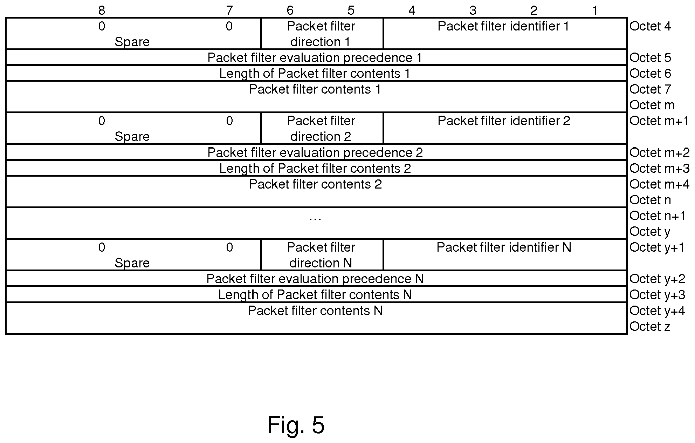

3GPP TS 23.401, section 5.4.5 and Fig. 5.4.5.-1 (herein replicated as Fig. 2), explains the UE requested bearer resource modification procedure for an E-UTRAN. The procedure allows the UE to request for a modification of bearer resources (e.g. allocation or release of resources) for one traffic flow aggregate with a specific QoS demand. If accepted by the network, the request invokes the Dedicated Bearer Activation Procedure. The procedure is used by the UE when the UE already has a PDN connection with the PDN GW. Modification and deletion of a bearer are possible by the procedure, too, but not considered in the context of the present application.

In this procedure the UE signals a Traffic Aggregate Description (TAD) which is a partial TFT, together with a Procedure Transaction Identifier (PTI). The TAD is released by the UE after it has received a TFT related to the current PTI from the network.

Basically, the steps shown in Fig. 2 are as follows (for further details, see 3GPP TS 23.401):
1. In order to add a bearer, the UE sends a Request Bearer Resource Modification (LBI, PTI, QoS, TAD, Protocol Configuration Options) message to the MME. The TAD indicates one requested operation (add, modify, or delete packet filters). If traffic flows are added, the TAD includes the packet filter(s) (consisting of the packet filter information including packet filter precedence, but without a packet filter identifier) to be added. The UE also sends the QCI requested and GBR, if applicable, for the added traffic flows.
2. The MME sends the Bearer Resource Command (IMSI, LBI, PTI, QoS, TAD, Protocol Configuration Options) message to the selected Serving GW. The MME validates the request using the Linked Bearer Id. The same Serving GW address is used by the MME as for the EPS Bearer identified by the Linked Bearer Id received in the Request Bearer Resource Modification message.
3. The Serving GW sends the Bearer Resource Command (IMSI, LBI, PTI, QoS, TAD, Protocol Configuration Options) message to the PDN GW. The Serving GW sends the message to the same PDN GW as for the EPS Bearer identified by the Linked Bearer Id.
4. The PDN GW may either apply a locally configured QoS policy, or it may interact with the PCRF to trigger the appropriate PCC decision, which may take into account subscription information.
5. If the request to add a bearer is accepted, the Dedicated Bearer Activation Procedure (according to clause 5.4.1 of 3GPP TS 23.401) is invoked. The PTI allocated by the UE is used as a parameter in the invoked Dedicated Bearer Activation Procedure. Fig. 2 shows also options for modifying and deleting a bearer.
6. If the PDN GW interacted with the PCRF in step 4, the PDN GW indicates to the PCRF whether the PCC decision could be enforced or not.

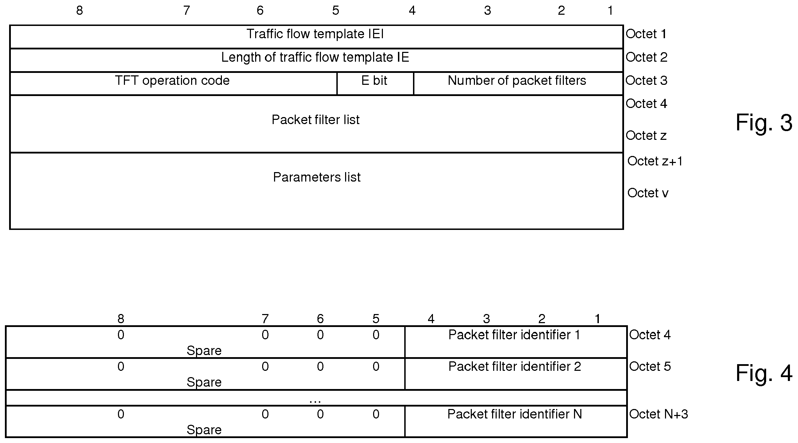

3GPP TS 24.301, section 9.9.4.15, and TS 24.008, section 10.5.6.12, define the TFT with its filters. Figs. 3 to 5 show some format of TFTs taken from 3GPP TS 24.008.

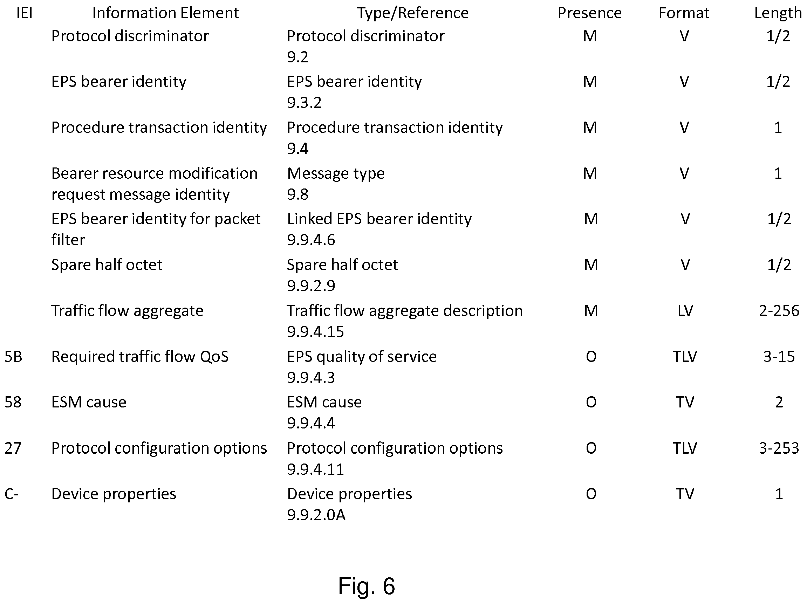

Fig. 6 shows Table 8.3.10.1: BEARER RESOURCE MODIFICATION REQUEST message content of 3GPP TS 23.401.

Prior art can be found e.g. in document US 8,566,455 B1 disclosing a Method and Apparatus for Supporting Multiple Connections in 3GPP Systems, and in document US 2011/0110378 A1 disclosing a Method and Apparatus for Communications Traffic Breakout.

### Summary of the invention

It is an object of the present invention to improve the prior art.

The invention is defined by the subject-matter of the independent claims.

According to some embodiments of the invention, at least one of the following advantages may be achieved:
- An own IID is assigned to the dedicated bearer;
- P-GW is made aware of the IID to be used for traffic separation;
- multi-path traffic and single-path traffic may use the same dedicated bearer;
- the solution is backwards compatible.

From MPTCP point of view, having two IP addresses for the 3GPP access over two different cell layers, both MPTCP paths would be in full control of the operator, but yet maintaining the multipath benefits on the IP layer, serving the common TCP entity and layers above the TCP ports.

MPTCP run in this way allows throughput increase, better link robustness, (automatic) balancing of load over the two paths and in addition, a joint congestion (TCP) algorithm.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein
Fig. 1 shows a MPTCP stack according to RFC6824;
Fig. 2 shows a message flow according to 3GPP TS 23.401, section 5.4.5;
Fig. 3 shows a Traffic flow template information element according to Figure 10.5.144 of 3GPP TS 24.008: Traffic flow template information element;
Fig. 4 shows a Packet filter list when the TFT operation is "delete packet filters from existing TFT" (z=N+3), according to Figure 10.5.144a of 3GPP TS 24.008;
Fig. 5 shows a Packet filter list when the TFT operation is "create new TFT", or "add packet filters to existing TFT" or "replace packet filters in existing TFT", according to Figure 10.5.144b of 3GPP TS 24.008;
Fig. 6 shows Table 8.3.10.1: BEARER RESOURCE MODIFICATION REQUEST message content of 3GPP TS 23.401;
Fig. 7 shows an apparatus according to an embodiment of the invention;
Fig. 8 shows a method according to an embodiment of the invention;
Fig. 9 shows an apparatus according to an embodiment of the invention;
Fig. 10 shows a method according to an embodiment of the invention; and
Fig. 11 shows an apparatus according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

PCT/EP2014/061325 states: "Again here the 3GPP specifications should enable UE to configure the Interface Identifier portion of the IPv6 address freely per each EPS bearer and the P-GW should be made aware to route downlink data traffic according to the source IPv6 address the UE is using for each EPS bearer." But details how this should be achieved are not given.

Assuming a PDN connection with one default bearer (Pre1 + IID1) and one dedicated bearer the problems to solve are:
1) The dedicated bearer must get assigned an own IID2.
2) The PGW needs to be made aware that the IID2 should be used for traffic separation. (The TFT filter information today contains the IID part but it is not used for filtering.)
3) A schema needs to be introduced that works with and without MPTCP and the solution needs to be backward compatible (with and without evaluating the IID). So it is assumed that a bearer may carry either an MPTCP flow (or several MPTCP flows), only non-MPTCP flows or both.

Some embodiments of the invention apply to devices/UE capable for dual connectivity. The availability of small cells and dual connectivity in the location the UE is roaming may be a trigger for the UE to establish a dedicated bearer if it so far supports only the default bearer.

According to some embodiments of the invention, a MPTCP capable UE will assign an IID2 when establishing a dedicated bearer.

To establish or modify a dedicated bearer for an MPTCP flow the UE can use the UE - core network related procedure (NAS) in 23.401 [1], section 5.4.5 "UE requested bearer resource modification". In both cases (i.e. establishing and modifying the dedicated bearer) the newly created IID2 may be transferred. E.g., IID2 may be transferred in the TAD/TFT filters. Alternatively or in addition, IID2 may be transferred in a new parameter, or in an enhancement of e.g. the Protocol Configuration Options (PCO). In addition, a relevance parameter, hereinafter sometimes named "I ID relevant" parameter indicating if IID2 is relevant for MPTCP may be transferred in a new parameter, or in an enhancement of e.g. the Protocol Configuration Options (PCO). In this case, messages 1. to 3. of Fig. 2 are enhanced over their conventional format.

If the same bearer carries both MPTCP and non-MPTCP flows (also named single-path flows), filters for each flow are parallel set up for the bearer. The filters for the non-MPTCP flows may be based on IPv6 prefix as per current specifications, i.e. with no "IID relevant" marking, and the filters for the MPTCP flows may be based on the use of the whole IPv6 address, i.e. both the prefix and IID, with "IID relevant" marking. In some example useful for understanding the invention, the presence of the "IID relevant marking" triggers the network / P-GW to heed also the IID part of the IPv6 filter, whereas the absence of the "IID relevant marking" causes the network / P-GW to operate on the filter ignoring the IID part.

In some embodiments of the invention, a higher precedence / priority is allocated to a filter with IID marking than to filters with a prefix only usage. This way the packets matching the IID can be routed to the correct bearer.

In the same messages, a new traffic filter or filter modification may be performed with the TAD/TFT parameter, as according to 3GPP TS 23.401:
"The TAD indicates one requested operation (add, modify, or delete packet filters). If traffic flows are added, the TAD includes the packet filter(s) (consisting of the packet filter information including packet filter precedence, but without a packet filter identifier) to be added. If the UE wants to link the new packet filter(s) to an existing packet filter to enable the usage of existing bearer resources for the new packet filter(s), the UE shall provide an existing packet filter identifier together with the new packet filter(s)."

According to some embodiments of the invention, when adding or modifying a dedicated bearer, it may be combined with a change of the QoS parameters for an existing bearer to be better suited for MPTCP. E.g. MPTCP works best if both paths/bearers have a comparable bandwidth and delay characteristic.

According to some embodiments of the invention, the new/modified filter contains IID2 for the UE source IP address parameter (in case of modification, IID1 may be overwritten by IID2). In the P-GW, those filters may get a label to be the only ones that should treat the IID as filter criteria in order to solve problem (2) hereinabove.

The existence of the new parameter "IID" or only a marker "IID relevant" for certain filters in the messages 1. to 3. of Fig. 2, will trigger the PGW to take also the IID as a filter criteria when allocating traffic to that bearer.

Thus, the problems 1) and 2) are solved by some embodiments of the invention.

Internally, the UE also allocates the Prefix1+ IID2 as source address to the dedicated bearer so that two different IP addresses are available for the TCP/IP stacks of MPTCP.

In order to solve problem 3, according to some embodiments of the invention, a schema is introduced that works for flows with and without MPTCP (multipath flows and single-path flows). Preferably, the schema is backward compatible (i.e. covers the cases of evaluating and not-evaluating the IID). An example is a case, where a bearer should carry in addition to TCP/MPTCP traffic some single-path traffic, e.g. UDP traffic. The UDP traffic is not distributed over several bearers but transported on the dedicated bearer only.

According to some embodiments of the invention, if MPTCP will not be used with the dedicated bearer, the same IID1 as for the default bearer will be used as usual. Consequently, according to some of these embodiments, there are at least two filters in the TADs/TFTs:
**1.** For non-MPTCP traffic, TFT filter(s)1 as usual to identify some flows/ services etc. It has flow parameters in addition to the UE source IP address with IID1 (IID1 may be ignored in the P-GW), otherwise no traffic would go through the default bearer.
**2.** Second TFT filter2 for MPTCP: it contains at least UE source address with IID2 (in the destination address part of the DL traffic filter), and in addition the port number for TCP may be set. That filter has the label for IID treatment ("IID relevant").

According to some embodiments, the priority of the filters may be as follows:
1.) Filter2 for MPTCP
2.) Filter(s)1 for no MPTCP

Consequently, in these embodiments of the invention, the concept of running old and new filters in parallel means that the dedicated bearer receives packets with two IP addresses:
- Prefix1+ IID1 (IID1 is also used in the default bearer) for non-MPTCP traffic; and
- Prefix1 + IID2 created for MPTCP.

As obvious, the suggested "IID relevant" indication may in practice be transferred in many different ways. For example, it may be transferred in one of the spare bits contained in the packet filter list (which is part of the TFT definition) for each filter (see Figs. 3 to 5).

The IPv6 address is defined in the TFT (as per TS 24.008) with "a sixteen octet IPv6 address field and one octet prefix length field". So, according to some embodiments of the invention, a filter is indicated to be "IID relevant" by setting the prefix length to the maximum, indicating that all bits of the address are relevant for the filter.

The Bearer Resource Modification request message, as shown in Fig. 6, supports a container mechanism, the Protocol Configuration Options (PCO) information element. Consequently, in some embodiments of the invention, the "IID relevant" indication is transported in a PCO container. Therein, other new parameters (even filter definitions, if needed) may be transported, too.

According to some embodiments of the invention, the indication that a filter is "IID relevant" is transferred in a newly defined information element in the used message. The information element may contain e.g. filter IDs (as per the TFT definition) and the related "IID relevant" indications, and if appropriate/needed, any other new parameters (even filter definitions).

According to some embodiments of the invention, traffic for MPTCP is separated (distributed over bearers such as default bearer and dedicated bearer) with minimal changes to the current 3GPP procedures. In some embodiments of the invention, only one new parameter (the interface ID for the dedicated bearer) is transferred between UE and P-GW. In some embodiments of the invention, the filters that contain the "dedicated" IID are marked to inform the PGW that the IID will be taken into account for traffic filtering ("IID relevance").

The provision of multi-access/path by the same 3GPP technology i.e. using macro network and using a separate small cell layer, networking is in much better control of the 3GPP EPC, compared to multi-access by 3GPP and non-3GPP (WLAN) accesses. The control of radio resources can be kept in the MeNB, which configures master cell group and small cell group for the UE.

From MPTCP point of view, having two IP addresses over the 3GPP access over two different cell layers, both MPTCP paths are in full control of the operator, but yet maintaining the multipath benefits on the IP layer, serving the common TCP entity and layers above TCP.

In case MPTCP is run this way, it allows throughput increase, better link robustness, automatic balancing of load over the two paths and in addition, a joint congestion (tcp) algorithm. Even better, it may automatically tolerate drop of the other path, if e.g. small cell coverage would end, without any dramatic impact to the TCP (or application above it) other than throughput decrease.

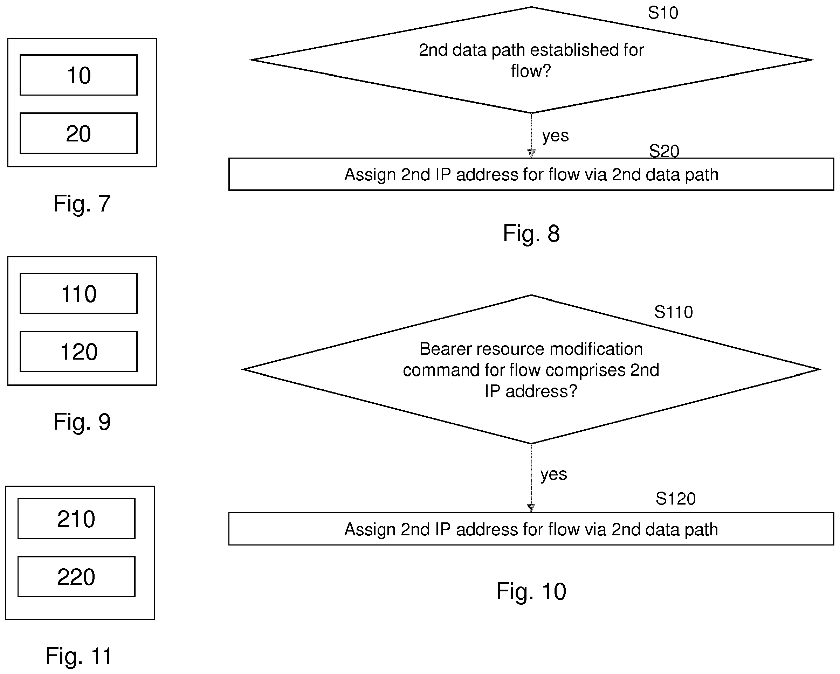

Fig. 7 shows an apparatus according to an example useful for understanding the invention. The apparatus may be a terminal such as a UE, or an element thereof. Fig. 8 shows a method according to an example useful for understanding the invention. The apparatus according to Fig. 7 may perform the method of Fig. 8 but is not limited to this method. The method of Fig. 8 may be performed by the apparatus of Fig. 7 but is not limited to being performed by this apparatus. The apparatus comprises monitoring means 10, and assigning means 20.

The monitoring means 10 monitors if a second data path is established for a flow (S10). Therein, a first internet protocol address is configured for the flow via a first data path between the apparatus and a packet data network. At least a part of the first data path belongs to a radio access technology;

If the second data path is established (S10 = "yes"), the assigning means 20 assigns a second internet protocol address different from the first internet protocol address for the flow via the second data path. At least a part of the second data path belongs to the radio access technology of the part of the first data path. The part of the first data path is different from the part of the second data path.

Fig. 9 shows an apparatus according to an example useful for understanding the invention. The apparatus may be a gateway such as a P-GW, or an element thereof. Fig. 10 shows a method according to an example usefule for understanding the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises monitoring means 1 10 and assigning means 120.

The monitoring means 1 10 monitors if a received bearer resource modification command related to a flow to a terminal comprises a second internet protocol address (S1 10). Therein, the flow is established via a first data path using a first internet protocol address to address the terminal. The bearer resource modification command requests to establish a second data path for the flow to the terminal. The second data path is different from the first data path, and the second internet protocol address is different from the first internet protocol address

If the bearer resource modification command comprises the second internet protocol address (S1 10 = "yes"), the assigning means 120 assigns the second internet protocol address to the second data path for the flow to the terminal (S120).

Fig. 1 1 shows an apparatus according to an example useful for understanding the invention. The apparatus comprises at least one processor 210, at least one memory 220 including computer program code, and the at least one processor, with the at least one memory and the computer program code, being arranged to cause the apparatus to perform at least one of the methods according to Figs. 8 and 10.

A terminal may be any device capable to be connected to the radio access network, such as a UE, a laptop, a tablet, a smartphone, a communicator, a machine, a robot, a wearable etc.

Embodiments of the invention are described for two base stations and two data paths. However, the number of base stations per data path may be larger than two. For example, if the base stations are arranged in groups such as MCG and/or SCG, a data path may use some or all of the base stations of the respective base station group. The MCG may provide resources for multiple cells and multiple component carriers. The SCG may provide resources for multiple cells and multiple component carriers.

Also, the number of data paths is not limited to two. The UE may have more than two data paths with related IP addresses. Each of the data paths may comprise one or more base stations.

According to some embodiments of the invention, the terminal may be a LTE dual connectivity capable UE. According to some embodiments of the invention the EPC supports dual LTE radio interfaces/data paths associated to a single PDN connection. According to some embodiments of the invention, the EPC supports dual LTE interfaces/data paths associated to multiple PDN connections. According to some embodiments of the invention MPTCP protocol, MPTCP services, are provided over the Intra-LTE access dual connectivity.

Distribution of downlink traffic to different data paths may be based on MPTCP, as described. However, in some embodiments of the invention, only part of the MPTCP algorithms may be implemented, or other algorithms than MPTCP may be used to decide on the distribution of traffic to different data paths. For example, downlink traffic responding to uplink traffic may be routed via the data path on which the uplink traffic was routed. In some embodiments, the decision on the respective data path for downlink traffic may be communicated to the P-GW via signaling messages from a control entity.

Adding and modification of a dedicated bearer may be made using the Request Bearer Resource Modification as according to Fig. 2 and its enhancements as described herein. However, embodiments of the invention may use other commands and message flows resulting in adding/modifying a bearer and assigning it to a multipath flow. E.g., the command(s) may depend on the technology (such as a RAT) used to connect a terminal and P-GW.

Embodiments of the invention are described where multiple data paths are used for both uplink and downlink of a terminal. However, according to some embodiments of the invention, multiple data paths may be used for the uplink only, whereas all downlink traffic is routed via a single downlink data path to the terminal. Also in some embodiments of the invention, multiple data paths may be used for the downlink only, whereas all uplink traffic is routed via a single uplink path to the server. Also, in some embodiments of the invention, specific downlink traffic may be sent over multiple data paths, whereas other downlink traffic may be sent over a single data path. Also, in some embodiments of the invention, specific uplink traffic may be sent over multiple data paths, whereas other uplink traffic may be sent over a single data path. In each case, whether using multipath to one or both link directions, TCP Acknowledgements may be expected to the reverse direction, as TCP forms a bidirectional connection between the source and destination TCP ports.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality. The functionality may be integral to one or few of the network elements or it may be shared or distributed among the network elements, or their cloud.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

According to the above description, it should thus be apparent that exemplary embodiments of the present invention provide, for example a terminal such as a user equipment, or a component thereof, an apparatus embodying the same, a method for controlling and/or operating the same, and computer program(s) controlling and/or operating the same as well as mediums carrying such computer program(s) and forming computer program product(s). Furthermore, according to the above description, it should thus be apparent that exemplary embodiments of the present invention provide, for example a gateway such as a P-GW, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Terminal, comprising
monitoring means configured to monitor if a second bearer of a radio access technology between the terminal and a second base station is established, wherein a first bearer of the radio access technology is established between the terminal and a first base station different from the second base station;
assigning means configured to assign, if the second bearer is established, a second internet protocol address to a second data path via the second bearer, wherein a first internet protocol address different from the second internet protocol address is assigned to a first data path via the first bearer;
setting means configured to set up a first subflow for a flow between the terminal and a server via the first data path and a second subflow for the flow between the terminal and the server via the second data path;
transferring means configured to transfer a second interface identifier and a relevance parameter in a bearer resource modification command to the packet data gateway; wherein
the first internet protocol address comprises a prefix and a first interface identifier;
the second internet protocol address comprises the prefix and the second interface identifier different from the first interface identifier;
the prefix is provided by the packet data gateway; and the relevance parameter triggers the packet data gateway to also take the first interface identifier and the second interface identifier as filter criteria.

2. The terminal according to claim 1, wherein
the monitoring means is adapted to determine that the second bearer is established if a bearer resource modification command for the second data path is issued.

3. The terminal according to claim 2, further comprising
supervising means adapted to supervise if a network to which the terminal is connected, enables establishing of the second data path; and
establishing means adapted to establish the second data path by issuing the bearer resource modification command if the establishing is enabled.

4. Packet data gateway, comprising
monitoring means configured to monitor if a bearer resource modification command comprising a second interface identifier of a second internet protocol address and a relevance parameter is received from a terminal by the packet data gateway, wherein a first internet protocol address is assigned to the terminal,
filtering means configured to filter, if the second interface identifier and the relevance parameter are received, a flow for the terminal into a first subflow and a second subflow based on a first interface identifer and the second interface identifier, wherein
the first internet protocol address comprises a prefix and the first interface identifier;
the second internet protocol address comprises the prefix and the second interface identifier different from the first interface identifier;
the prefix is provided by the packet data gateway to the terminal.

5. Method, comprising
monitoring if a second bearer of a radio access technology between a terminal and a second base station is established, wherein a first bearer of the radio access technology is established between the terminal and a first base station different from the second base station;
assigning, if the second bearer is established, a second internet protocol address to a second data path via the second bearer, wherein a first internet protocol address different from the second internet protocol address is assigned to a first data path via the first bearer;
setting up a first subflow for a flow between the terminal and a server via the first data path and a second subflow for the flow between the terminal and the server via the second data path;
transferring a second interface identifier and a relevance parameter in a bearer resource modification command to the packet data gateway; wherein
the first internet protocol address comprises a prefix and a first interface identifier;
the second internet protocol address comprises the prefix and the second interface identifier different from the first interface identifier;
the prefix is provided by the packet data gateway; and
the relevance parameter triggers the packet data gateway to also take the first interface identifier and the second interface identifier as filter criteria.

6. Method, comprising
monitoring if a bearer resource modification command comprising a second interface identifier of a second internet protocol address and a relevance parameter is received from a terminal by a packet data gateway, wherein a first internet protocol address is assigned to the terminal,
filtering, if the second interface identifier and the relevance parameter are received, a flow for the terminal into a first subflow and a second subflow based on a first interface identifer and the second interface identifier, wherein
the first internet protocol address comprises a prefix and the first interface identifier;
the second internet protocol address comprises the prefix and the second interface identifier different from the first interface identifier;
the prefix is provided by the packet data gateway to the terminal.

## Patentansprüche

1. Endgerät, das Folgendes umfasst:
ein Überwachungsmittel, das konfiguriert ist, zu überwachen, ob ein zweiter Träger einer Funkzugangstechnologie zwischen dem Endgerät und einer zweiten Basisstation hergestellt ist, wobei ein erster Träger der Funkzugangstechnologie zwischen dem Endgerät und einer ersten Basisstation, die von der zweiten Basisstation verschieden ist, hergestellt ist;
Zuweisen eines Mittels, das konfiguriert ist, dann, wenn der zweite Träger hergestellt ist, einem zweiten Datenpfad über den zweiten Träger eine zweite Internetprotokolladresse zuzuweisen, wobei einem ersten Datenpfad über den ersten Träger eine erste Internetprotokolladresse zugewiesen ist, die von der zweiten Internetprotokolladresse verschieden ist;
ein Setzmittel, das konfiguriert ist, einen ersten Unterstrom für einen Strom zwischen dem Endgerät und einem Server über den ersten Datenpfad und einen zweiten Unterstrom für den Strom zwischen dem Endgerät und dem Server über den zweiten Datenpfad aufzubauen; und
ein Übertragungsmittel, das konfiguriert ist, eine zweite Schnittstellenkennung und einen Relevanzparameter in einer Trägerbetriebsmitteländerungsanweisung zum Paketdaten-Gateway zu übertragen; wobei
die erste Internetprotokolladresse ein Präfix und eine erste Schnittstellenkennung umfasst;
die zweite Internetprotokolladresse das Präfix und die zweite Schnittstellenkennung, die von der ersten Schnittstellenkennung verschieden ist, umfasst;
das Präfix durch das Paketdaten-Gateway geliefert wird und der Relevanzparameter auslöst, dass das Paketdaten-Gateway auch die erste Schnittstellenkennung und die zweite Schnittstellenkennung als Filterkriterien verwendet.

2. Endgerät nach Anspruch 1, wobei
das Überwachungsmittel ausgelegt ist, zu bestimmen, dass der zweite Träger hergestellt wird, wenn eine Trägerbetriebsmitteländerungsanweisung für den zweiten Datenpfad ausgegeben wird.

3. Endgerät nach Anspruch 2, das ferner Folgendes umfasst:
ein Überwachungsmittel, das ausgelegt ist, zu überwachen, ob ein Netz, zu dem das Endgerät verbunden ist, ein Herstellen des zweiten Datenpfades ermöglicht; und
ein Herstellungsmittel, das ausgelegt ist, den zweiten Datenpfad durch Ausgeben der Trägerbetriebsmitteländerungsanweisung aufzubauen, wenn das Herstellen ermöglicht ist.

4. Paketdaten-Gateway, das Folgendes umfasst:
ein Überwachungsmittel, das konfiguriert ist, zu überwachen, ob eine Trägerbetriebsmitteländerungsanweisung, die eine zweite Schnittstellenkennung einer zweiten Internetprotokolladresse und ein Relevanzparameter von einem Endgerät durch das Paketdaten-Gateway empfangen wird, wobei dem Endgerät eine erste Internetprotokolladresse zugewiesen ist, und
ein Filtermittel, das konfiguriert ist, dann, wenn die zweite Schnittstellenkennung und der Relevanzparameter empfangen werden, einen Strom für das Endgerät auf der Grundlage einer ersten Schnittstellenkennung und der zweiten Schnittstellenkennung in einen ersten Unterstrom und einen zweiten Unterstrom zu filtern, wobei
die erste Internetprotokolladresse ein Präfix und eine erste Schnittstellenkennung umfasst;
die zweite Internetprotokolladresse das Präfix und die zweite Schnittstellenkennung, die von der ersten Schnittstellenkennung verschieden ist, umfasst;
das Präfix durch das Paketdaten-Gateway zum Endgerät geliefert wird.

5. Verfahren, das Folgendes umfasst:
Überwachen, ob ein zweiter Träger einer Funkzugangstechnologie zwischen einem Endgerät und einer zweiten Basisstation hergestellt ist, wobei ein erster Träger der Funkzugangstechnologie zwischen dem Endgerät und einer ersten Basisstation, die von der zweiten Basisstation verschieden ist, hergestellt ist;
Zuweisen einer zweiten Internetprotokolladresse zu einem zweiten Datenpfad über den zweiten Träger, dann, wenn der zweite Träger hergestellt ist, wobei einem ersten Datenpfad über den ersten Träger eine erste Internetprotokolladresse zugewiesen ist, die von der zweiten Internetprotokolladresse verschieden ist;
Herstellen eines ersten Unterstroms für einen Strom zwischen dem Endgerät und einem Server über den ersten Datenpfad und eines zweiten Unterstroms für den Strom zwischen dem Endgerät und dem Server über den zweiten Datenpfad und
Übertragen einer zweiten Schnittstellenkennung und eines Relevanzparameters in einer Trägerbetriebsmitteländerungsanweisung zum Paketdaten-Gateway; wobei
die erste Internetprotokolladresse ein Präfix und eine erste Schnittstellenkennung umfasst;
die zweite Internetprotokolladresse das Präfix und die zweite Schnittstellenkennung, die von der ersten Schnittstellenkennung verschieden ist, umfasst;
das Präfix durch das Paketdaten-Gateway geliefert wird und
der Relevanzparameter auslöst, dass das Paketdaten-Gateway auch die erste Schnittstellenkennung und die zweite Schnittstellenkennung als Filterkriterien verwendet.

6. Verfahren, das Folgendes umfasst:
Überwachen, ob eine Trägerbetriebsmitteländerungsanweisung, die eine zweite Schnittstellenkennung einer zweiten Internetprotokolladresse und einen Relevanzparameter umfasst, von einem Endgerät durch ein Paketdaten-Gateway empfangen wird, wobei dem Endgerät eine erste Internetprotokolladresse zugewiesen ist,
Filtern, dann, wenn die zweite Schnittstellenkennung und der Relevanzparameter empfangen werden, eines Stroms für das Endgerät auf der Grundlage einer ersten Schnittstellenkennung und der zweiten Schnittstellenkennung in einen ersten Unterstrom und einen zweiten Unterstrom, wobei
die erste Internetprotokolladresse ein Präfix und eine erste Schnittstellenkennung umfasst;
die zweite Internetprotokolladresse das Präfix und die zweite Schnittstellenkennung, die von der ersten Schnittstellenkennung verschieden ist, umfasst;
das Präfix durch das Paketdaten-Gateway zum Endgerät geliefert wird.

## Revendications

1. Terminal, comprenant
des moyens de surveillance configurés pour surveiller si un deuxième support d'une technologie d'accès radio entre le terminal et une deuxième station de base est établi, un premier support de la technologie d'accès radio étant établi entre le terminal et une première station de base différente de la deuxième station de base ;
des moyens d'attribution configurés pour attribuer, si le deuxième support est établi, une deuxième adresse de protocole internet à un deuxième chemin de données par l'intermédiaire du deuxième support, une première adresse de protocole internet différente de la deuxième adresse de protocole internet étant attribuée à un premier chemin de données par l'intermédiaire du premier support ;
des moyens de mise en place configurés pour mettre en place un premier flux secondaire pour un flux entre le terminal et un serveur par l'intermédiaire du premier chemin de données et un deuxième flux secondaire pour le flux entre le terminal et le serveur par l'intermédiaire du deuxième chemin de données ;
des moyens de transfert configurés pour transférer un deuxième identifiant d'interface et un paramètre de pertinence dans une commande de modification de ressource de support à la passerelle de données par paquets ; dans lequel
la première adresse de protocole internet comprend un préfixe et un premier identifiant d'interface ;
la deuxième adresse de protocole internet comprend le préfixe et le deuxième identifiant d'interface différent du premier identifiant d'interface ;
le préfixe est fourni par la passerelle de données par paquets ; et
le paramètre de pertinence déclenche la passerelle de données par paquets pour adopter aussi le premier identifiant d'interface et le deuxième identifiant d'interface comme critères de filtre.

2. Terminal selon la revendication 1, dans lequel
les moyens de surveillance sont adaptés pour déterminer que le deuxième support est établi si une commande de modification de ressource de support pour le deuxième chemin de données est émise.

3. Terminal selon la revendication 2, comprenant en outre
des moyens de supervision adaptés pour superviser si un réseau auquel est connecté le terminal, permet d'établir le deuxième chemin de données ; et
des moyens d'établissement adaptés pour établir le deuxième chemin de données en émettant la commande de modification de ressource de support si l'établissement est validé.

4. Passerelle de données par paquets, comprenant
des moyens de surveillance configurés pour surveiller si une commande de modification de ressource de support comprenant un deuxième identifiant d'interface d'une deuxième adresse de protocole internet et un paramètre de pertinence est reçue depuis un terminal par la passerelle de données par paquets, une première adresse de protocole internet étant attribuée au terminal,
des moyens de filtre configurés pour filtrer, si le deuxième identifiant d'interface et le paramètre de pertinence sont reçus, un flux pour le terminal en un premier flux secondaire et un deuxième flux secondaire sur la base d'un premier identifiant d'interface et du deuxième identifiant d'interface, dans laquelle
la première adresse de protocole internet comprend un préfixe et le premier identifiant d'interface ;
la deuxième adresse de protocole internet comprend le préfixe et le deuxième identifiant d'interface différent du premier identifiant d'interface ;
le préfixe est fourni au terminal par la passerelle de données par paquets.

5. Procédé, comprenant la
Surveillance du fait de savoir si un deuxième support d'une technologie d'accès radio entre un terminal et une deuxième station de base est établi, dans lequel un premier support de la technologie d'accès radio est établi entre le terminal et une première station de base différente de la deuxième station de base ;
l'attribution, si le deuxième support est établi, d'une deuxième adresse de protocole internet à un deuxième chemin de données par l'intermédiaire du deuxième support, une première adresse de protocole internet différente de la deuxième adresse de protocole internet étant attribuée à un premier chemin de données par l'intermédiaire du premier support ;
la mise en place d'un premier flux secondaire pour un flux entre le terminal et un serveur par l'intermédiaire du premier chemin de données et un deuxième flux secondaire pour le flux entre le terminal et le serveur par l'intermédiaire du deuxième chemin de données ;
le transfert d'un deuxième identifiant d'interface et d'un paramètre de pertinence dans une commande de modification de ressource de support à la passerelle de données par paquets ; dans lequel
la première adresse de protocole internet comprend un préfixe et un premier identifiant d'interface ;
la deuxième adresse de protocole internet comprend le préfixe et le deuxième identifiant d'interface différent du premier identifiant d'interface ;
le préfixe est fourni par la passerelle de données par paquets ; et
le paramètre de pertinence déclenche la passerelle de données par paquets pour adopter aussi le premier identifiant d'interface et le deuxième identifiant d'interface comme critères de filtre.

6. Procédé, comprenant
la surveillance du fait de savoir si une commande de modification de ressource de support comprenant un deuxième identifiant d'interface d'une deuxième adresse de protocole internet et un paramètre de pertinence est reçue depuis un terminal par la passerelle de données par paquets, une première adresse de protocole internet étant attribuée au terminal,
le filtrage, si le deuxième identifiant d'interface et le paramètre de pertinence sont reçus, d'un flux pour le terminal en un premier flux secondaire et un deuxième flux secondaire sur la base d'un premier identifiant d'interface et du deuxième identifiant d'interface, dans lequel
la première adresse de protocole internet comprend un préfixe et le premier identifiant d'interface ;
la deuxième adresse de protocole internet comprend le préfixe et le deuxième identifiant d'interface différent du premier identifiant d'interface ;
le préfixe est fourni au terminal par la passerelle de données par paquets.
